# EUROPEAN PATENT SPECIFICATION

(11) **EP 3 156 707 B1**
(45) Date of publication and mention of the grant of the patent: **19.09.2018**
(21) Application number: 15306631.1
(22) Date of filing: 14.10.2015
(51) Int. Cl.: F16L 1/20, F16L 3/10

(54) **CLAMPING DEVICE, CONFIGURED TO BE SECURED AROUND A LINE, RELATED ASSEMBLY AND METHOD**
KLEMMVORRICHTUNG ZUR BEFESTIGUNG UM EINE LEITUNG, ENTSPRECHENDE ANORDNUNG UND VERFAHREN
DISPOSITIF DE SERRAGE CONFIGURÉ POUR ÊTRE FIXÉ AUTOUR D'UNE LIGNE, ENSEMBLE ET PROCÉDÉ ASSOCIÉS

(43) Date of publication of application: 19.04.2017
(73) Proprietor: Technip France, 92400 Courbevoie (FR)
(72) Inventor: WALSH, Timothy, North Perth, WA 6006 (AU); PHILLIPS, Paul, 76230 BOIS GUILLAUME (FR); BEAU, Mavric, West Perth, WA 6005 (AU)
(74) Representative: Lavoix

(56) References cited:
- WO-A1-2010/080041
- DE-A1-102008 044 942
- GB-A- 2 169 682
- GB-A- 2 322 406
- US-A1- 2004 234 342

## Description

The present invention concerns a clamping device according to the preamble of claim 1.

The line is for example a pipe, transporting a fluid (e.g.oil or natural gas) at the bottom of a body of water, or through a body of water towards a surface installation. In particular, the line is a flowline, preferably, a flexible pipe flowline.

In particular, the clamping device connects a gravity foundation buried in the bottom of the body of water to the flowline to axially restrain the flowline. The flexible pipe is preferably of the type described in the Standards of the American Petroleum Institute API 17B, and API 17J.

Traditionally, two-part clamps have been used to provide axial fixation of the flowline to the foundation when the line is subjected to a long term axial restraint. The two-part clamp is designed to the diameter of the pipe to be lowered in the body of water.

Typically, when the pipe is a rigid pipe, its diameter is well-known and quite constant along the pipe. For flexible pipes, the situation is more complicated, due to the diameter fluctuations which occurs in the manufacturing of such pipes.

Conception of the two-part clamp requires machining of the internal bore to the outer dimensions of the flexible pipe. Due to the fluctuations of outer diameter for a flexible pipe, this machining must typically wait after the flexible pipe manufacturing has finished in order to allow final measurement of the as-built pipe diameter.

In order to alleviate these problems, three-parts clamps have been designed such as disclosed for example in GB 2 322 406. Such three-part clamps are usually used with short bolts or straps for temporary application. They are not very well suited for long term axial load restraints.

One aim of the invention is to obtain a clamping device which is easy to clamp on lines of various structures and outer diameters, the clamping device being very resistant in terms of axial loads in the long term.

To this aim, the subject-matter of a clamping device according to claim 1.

The clamping device according to the invention may comprise one or more of the features of claims 2 to 12.

The invention also concerns a subsea assembly according to claim 13.

The invention also concerns a method for assembling a clamping device and a line, according to claim 14 or claim 15.

The invention will be better understood upon reading of the following description, given solely as an example, and made in reference to the appended drawings, in which:
- figure 1 is a side view of a first clamping device according to the invention, fastened on a flexible pipe;
- figure 2 is a partially exploded perspective view of the clamping components of the clamping device of figure 1;
- figure 3 is an end view of the clamping components, assembled together by the connecting elements;
- figure 4 is a view of the clamping device once assembled.

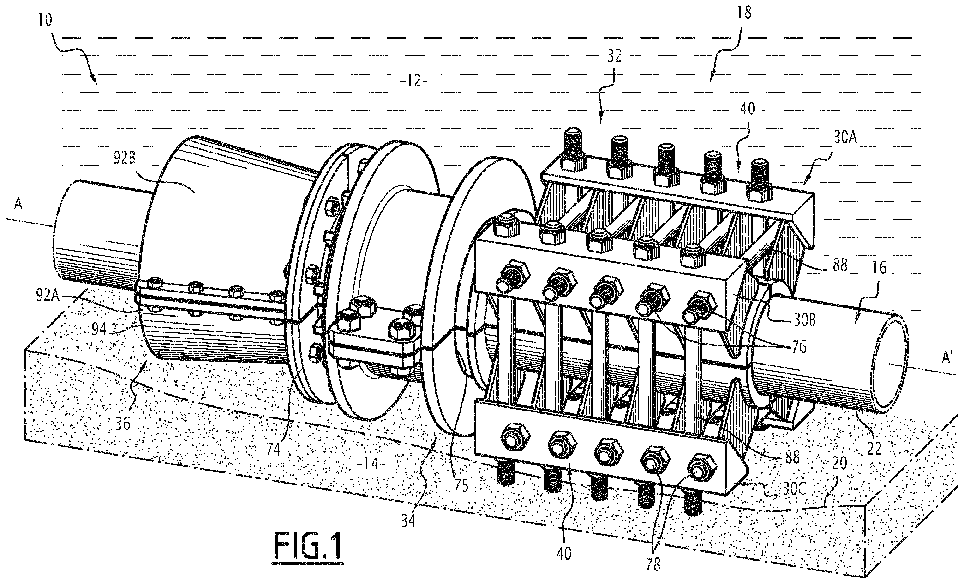

A first subsea assembly 10 according to the invention is shown in figure 1. The subsea assembly 10 is intended to be immersed in a body of water 12 shown schematically in figure 1, in a fluid production installation.

The body of water 12 is for example a sea, an ocean, a lake or even a river. Its depth at the location of the first subsea assembly 10 is comprised between 10 m and 3000 m.

The installation is producing hydrocarbonaceous fluids such as oil and natural gas. The installation is able to collect the hydrocarbonaceous fluid at the bottom 14 of the body of water 12 to convey it to the surface (not shown).

The subsea assembly 10 comprises at least a line 16 of the installation and a clamping device 18 according to the invention, assembled on the line 16.

The line 16 is preferentially a pipe. In particular, the line 16 is a flexible pipe such as a flexible pipe disclosed in standards API 17R and API 17J of the American Petroleum Institute. In a variant, the line 16 is a rigid pipe or in some instances, an umbilical or a cable.

The line 16 has a nominal internal diameter greater than or equal to 15 cm (2 inch).

The line 16 advantageously constitutes a flowline. The line 16 defines an external cylindrical outer surface 22 onto which the clamping device 18 is assembled.

In this example, the line 16 is located at the bottom 14 of the body of water 12. The subsea assembly 10 is connected to a gravity foundation 20 disposed on the bottom 14. The subsea assembly 10 is axially restrained on the gravity foundation 20 by the clamping device 18.

The clamping device 18 is rigidly connected to the line 16, without axial movement relative to the line 16 along the axis A-A' of the line 16.

As shown in figures 1 to 4, the clamping device 18 comprises four clamping components 30A to 30D and connecting elements 32 maintaining together the clamping components 30A to 30D to clamp the components 30A to 30D to the outer surface 22 of the line 16.

The clamping components 30A to 30D are made of steel having a yield strength greater than or equal to 170MPa. The yield strength is for example measured with standard ASTM A370.

As shown in figure 1, the clamping device 18 further comprises a swivel 34 engaged around the clamping components 30A to 30D and preferentially a bell mouth 36, connected axially at one end of the clamping components 30A to 30D.

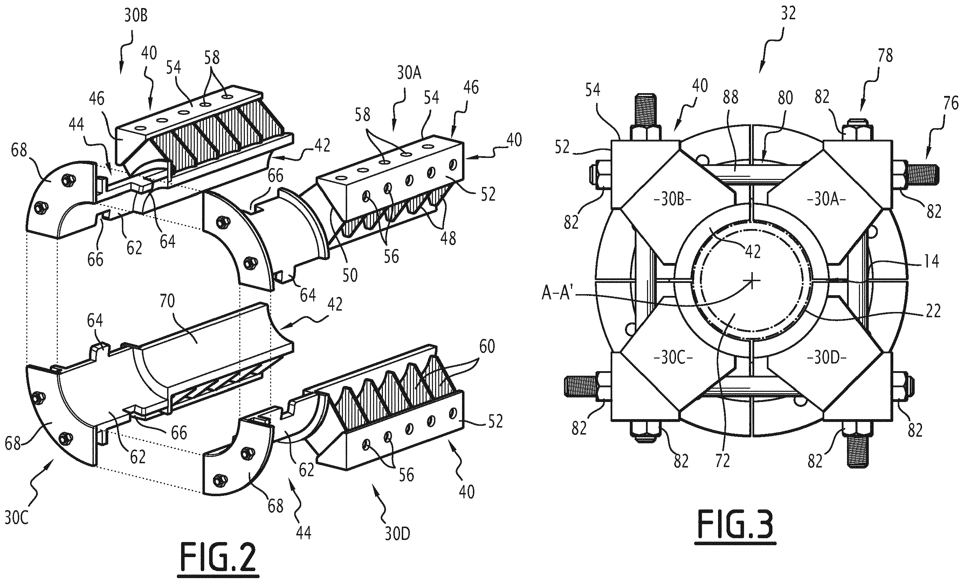

The clamping components 30A to 30D are placed around the axis A-A' of the line 16. They are angularly spaced one from another so as not to be in contact with another, as shown in figure 3. They are disposed regularly around the axis A-A', each component 30A to 30D being located in a respective angular sector of 90° around the axis A-A'.

Each clamping component 30A to 30B generally extends parallel to the axis A-A'. It comprises a longitudinal supporting member 40, and a contact shell member 42, defining a contact surface for contacting the outer surface 22 of the line 16, the contact shell member 42 protruding radially from the supporting member 40 towards the axis A-A'.

In the example of figure 2, each clamping component 30A to 30D further comprises a clamp shell 44 protruding axially from the supporting member 40, at an end of the supporting member 40.

The supporting member 40 comprises at least a longitudinal beam 46 and a series of transverse ribs 48 connecting the longitudinal beam 46 to the contact shell member 42.

The beam 46 extends longitudinally parallel to the axis A-A'. In this example, it has a triangular cross-section, taken perpendicularly to the axis A-A'. It defines an inner connecting surface 50, a first outer supporting surface 52 and a second outer supporting surface 54.

The connecting surface 50 faces the contact shell member 42. The ribs 48 project radially from the connecting surface 50 to the contact shell member 42.

The first outer supporting surface 52 and the second outer supporting surface 54 face away from the axis A-A'. The surfaces 52, 54 are inclined one with regard to another. More specifically, the first outer supporting surface 52 makes an angle of approximately 90° with the second outer supporting surface 54.

The beam 46 defines a first group of through passages 56 emerging in the first outer supporting surface 52 and a second group of through passages 58 emerging in the second outer surface 54.

The first through passages 56 are disposed axially apart from one another along the axis A-A'. They extend transversally to the axis A-A'. They emerge towards the axis A-A' in the connecting surface 50 between two adjacent ribs 48.

The second through passages 58 are axially offset from the first through passages 56. They extend at an angle from the first through passages 56, preferentially perpendicularly to the first through passages 56. They emerge in the connecting surface 50 between two adjacent ribs 48.

The ribs 48 connect the outer surface of a contact shell member 42 to the connecting surface 50 of the supporting member 40 in a plane substantially perpendicular to axis A-A'. They define a series of spaced apart cells 60 which are delimited on the side by two adjacent ribs 48, towards axis A-A' by the contact shell member 42, and away from the axis A-A' by the longitudinal beam 46.

The first through passages 56 and the second through passages 58 emerge in the cells 60. The cells 60 are opened laterally between two adjacent ribs 48 on each side of the beam 46.

The clamp shell 44 comprises a cylindrical part 62 and a lateral key 64 protruding circumferentially from the cylindrical part 62 towards the cylindrical part 62 of an adjacent clamping component 30. The clamp shell 44 defines a lateral notch 66 for receiving a corresponding key 64 of another adjacent clamping component 30D. It further comprises an end flange part 68 at its free edge.

The cylindrical segment 70 is advantageously made of steel.

As shown in figure 2, the contact shell member 42 comprises a cylindrical segment 70, having a contact surface intended to apply on the outer surface 22 of the line 16. In this example, the length of the cylindrical segment 70 is substantially equal or greater to the length of the supporting member 44.

When the cylindrical segments 70 are maintained on the line 16 by the connecting element 32, they are located spaced apart from another. They define a cylindrical inner lumen 72, extending along the axis A-A'. The diameter of the lumen 72 depends on the tightening of the connecting element 32, as it will be shown later. It adapts to the outer diameter of the line 16.

The cumulative angular extent of the contact surfaces around the axis A-A' in a plane transverse to the central lumen 72 is greater than 250°. Such an angular extent increases the retaining force applied on the line 16 when the cylindrical segments are maintained on the line 16. Moreover, the tightening forces are angularly spread around the line 16, which limits the risk of ovalization.

The use of at least four clamping components 30A to 30D clamped on the line 16 with a gap between each cylindrical segment 70 allows the clamping device 18 to also accommodate a partial local ovalization of the line 16 in specific cases.

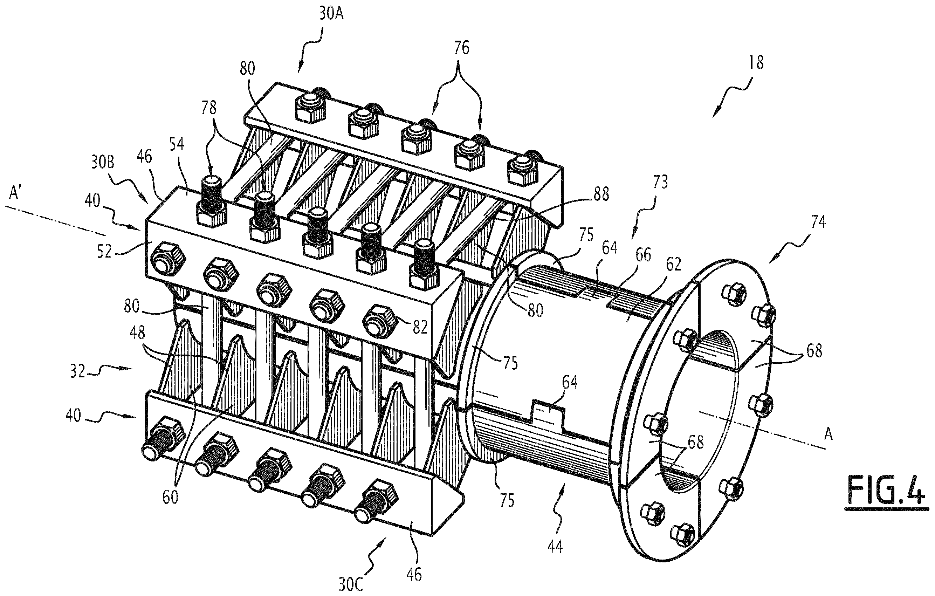

As shown in figure 4, the cylindrical segments 62 of the clamp shell 44 form a cylindrical sleeve 73 of inner diameter greater than the inner diameter of the lumen 72. The key 64 of each clamp shell 44 is received in a notch 66 of an adjacent clamp shell 64.

The flange parts 68 define a circumferential flange 74 for the assembly of the bell mouth 36, as shown in figure 4. The flange 74 on the one side, and circumferential stops 75 on the other side, define an annular housing located externally of the cylindrical segments 62 to receive the swivel 34.

According to the invention, the connecting elements 32 comprise a plurality of elastic tightening members 76, 78 connecting each supporting member 40 of a clamping component 30A to 30D with the supporting member 40 of the adjacent clamping components 30A to 30D.

In this example, the tightening members 76, 78 each comprise long bolts. Each long bolt comprise an elongated part which consists of a threaded rod 80 extending through respective through passages 56, 58 of the longitudinal beams 46 of two adjacent supporting members 40, and two end stops consisting of two nuts 82, applying on respective outer supporting surfaces 52, 54 of the beams 46 of the adjacent supporting members 40.

In figures 1 to 4, for each clamping component 30A, the connecting elements 32 comprise a first group of elastic tightening members 76 parallel one to another, connecting the clamping component 30A to a first adjacent clamping component 30B. The connecting elements 32 comprises a second group of elastic tightening members 78 axially offset and at an angle from the elastic tightening members 76 of the first group of elastic tightening members 76, the elastic tightening members 78 connecting the first clamping component 30A to a second adjacent clamping component 30D.

As shown in figure 3, each elastic tightening member 76 of the first group of elastic tightening members 76 extends through a through passage 56 and through a cell 60 of the components 30A, 30B. It has a first nut 82 applied on the outer surface 52 of the clamping component 30A and a second nut 82 extending on the outer surface 52 of the first adjacent clamping component 30B.

Each elastic tightening member 78 of the second group of elastic tightening member 78 extends substantially perpendicularly to the first elastic tightening member 76. It extends through a through passage 58 and through a cell 60 of the components 30A, 30D. It has a first nut 82 applied on the outer surface 54 of the clamping component 30A and a second nut 82 applied on the opposite outer surface 58 of the second adjacent clamping component 30D.

The long bolts have a length which is greater than the outer diameter of the line 16, preferentially of at least greater than 1.3 times the diameter of the line 16, and preferentially between 1.8 and 2.1 times the diameter of the line 16.

The ends of each elastic tightening member 76, 78 protrude outwardly from each clamping component 30A to 30D in which they are inserted.

As shown in figure 3, the central part 88 of each tightening member 76, 78 is located apart from the clamping components 30A to 30D which are connected by the tightening member 76, 78, in a free intermediate space between the supporting members 40, radially apart from the contact shell members 42. The length of the central part 88 located in the intermediate space is greater than 10% of the total length of the tightening member 76, 78

Consequently, the elastic tightening members 76, 78 essentially act as springs in the system and the load through the long bolts is directly proportional to their stiffness. Such long bolts reduce bolt load variation and fluctuation, relaxation (long term creep) and initial overtension required for nut relaxation. They have better fatigue design. The staggered disposition of the long bolts prevents crowding. Such long bolts are cheaper than strap clamps.

The tightening members 76, 78 are generally considered elastic, provided they are able to undergo a reversible elastic elongation of at least 0.2%.

Such an elongation is measured by providing a traction elongation equal to 0.2%, and determining whether the tightening members regains its initial dimensions once the traction elongation is removed.

In the example shown in figures 2 and 3, a series of at least four parallel elastic tightening members 76 and a series of at least four parallel elastic tightening members 78 are inserted in each clamping components 30A to 30D. The number of parallel elastic tightening members 76, 78 can be comprised between 2 and 40.

As shown in figure 1, the swivel 34 comprises at least two swivel parts 90A, 90B. It is connected to the gravity foundation 20, for example through an eyelet and potentially a chain.

The swivel 34 is rotatably engaged around the clamp shell 44, in the annular housing defined around the sleeve 73, to allow a rotational movement around axis A-A' between the line 16 clamped by the clamping component 30 and the gravity foundation 20 on which the swivel 34 is fixed.

The axial movement of the swivel 34 relative to the clamping components 30A to 30D is limited by the flange 74 on one side and by stops 75 on the other side.

The bell mouth 36 comprise at least two diverging members 92A, 92B which are assembled one with another and on the flange 74 to define a funnel 94.

The mounting of the subsea assembly 10 according to the invention will be now described.

Initially, four clamping components 30A to 30D are provided and are placed around the line 16. They are angularly distributed around axis A-A'. The contact shell members 42 are applied on the external peripheral surface 22 of the line 16. Each key 64 of a clamp shell 44 is inserted in a corresponding notch 66 of an adjacent clamp shell 44.

Then, the rods 80 of the first and second elastic tightening members 76, 78 are introduced respectively into the passages 56, 58 of each longitudinal beam 46 of two adjacent clamping components 30A to 30D. The nuts 82 are successively screwed on the rods 80 to apply on respective outer supporting surface 52, 58. The distance between the nuts 82 carried by the same rod 80 diminishes to tighten the clamping components 30A to 30D against the line 16, so as to adapt to the outer diameter of the line 16. The cylindrical segments 70 of each contact shell member 42 are then pressed on the outer surface of the line 16. The clamping components 30A to 30D are thus axially fixed on the line 16.

As shown in figure 3, the clamping components 30A to 30D remain angularly separated one from another at the edges of the contact shell members 42. The clamp shells 44 are connected one to another to form a cylindrical sleeve 73, as shown in figure 4. Similarly, the end flanged parts 68 are brought in the vicinity of one another to form a substantially continuous circumferential flange 74.

Then, the swivel 34 is put in place around the clamp shell 44 and is fixed to the gravity foundation 20. The bell mouth 36 is assembled on the flange 74 at the end of the clamping components 30A to 30D.

Thanks to its construction with four independent clamping components 30A to 30D, the clamping device 18 according to the invention allows a fabrication schedule which is totally independent of the line 16 on which it is mounted. There is no longer a requirement to accurately measure the outer diameter of the line 16 at the location where the clamping device 18 is to be installed. The clamping device 18 has a symmetric geometry, with evenly spaced gaps on the line 16 circumference. This facilitates the manufacturing and the tolerances on the diameter of the clamping components 30A to 30D, while preserving the design benefits of using elastic tightening members 76, 78 such as long tension bolts.

The four-parts construction of the clamping device 18, associated with the use of elastic tightening members 76, 78 provides an improved stress profile around the line 16 as compared to a two-part clamping device. There is a lesser risk of ovalization of the line 16. The clamping device 18 geometry is better suited to the characteristics of a line 16, in particular of a flexible pipe.

The clamping device 18 has improved clamping efficiency which allows the clamping length to be reduced, with potential for weights savings over two-part clamping device. Overall, the manufacturing, and the assembly of the clamping device 18 on the line 16 is cheaper, easier and more efficient.

In a variation, the elastic tightening members are long rivets and not long bolt.

In a variation, the clamping device 18 is not connected to a foundation but is connected to another subsea device, for example a pile, a dead weight and/or a buoy.

Generally, the long bolts are made of steel, preferably the long bolts are made of stainless steel. In another variant the long bolts are made of CRA (Corrosion Resistant Alloy). In an advantageous variant, titanium bolts are used to have a low Young's modulus and a more elastic behavior of the long bolts.

Typically, the clamp body (i.e the clamping components 30A to 30D and the clamp shells 44) will be corrosion protected through a combination of paint and/or anodes which are also electrically connected to the long bolts and swivel part in the case of carbon steel long bolts.

In a variation, the swivel 34 and/or the bell mouth 36 could be made in four parts instead of two parts.

In another variation, the clamping device 18 does not comprise a bell mouth 36 and/or a swivel 34.

## Claims

1. Clamping device (18) configured to be secured around a line (16), the clamping device (18) comprising clamping components (30A to 30D), intended to be placed adjacently around the line (16), each clamping component (30A to 30D) comprising:
- a longitudinal supporting member (40);
- a contact member (70), having a contact surface to contact the line (16), the contact member (70) protruding from the longitudinal supporting member (40);
the clamping device (18) comprising connecting elements (32) holding together the clamping components (30A to 30D) against the line (16), the contact members (70) of the clamping components (30A to 30D) together defining a central lumen (72) for receiving the line (16) ;
**characterized in that** the clamping device comprises at least four clamping components (30A to 30D) and **in that** the connecting elements (32) comprises, for each clamping component (30A to 30D) at least one elastic tightening member (76) connecting the supporting member (40) with a supporting member (40) of a first adjacent clamping component (30A to 30D) and at least one elastic tightening member (78) connecting the supporting member (40) with a supporting member (40) of a second adjacent clamping component (30A to 30D), each elastic tightening member (76, 78) comprising an elongated part and two end stops, each end stop cooperating respectively with a supporting surface (40), each elastic tightening member (76, 78) being longer than the transverse extent of the central lumen (72), and protruding beyond the supporting members (40) connected by the elastic tightening member (76, 78).

2. Clamping device (18) according to claim 1, wherein each elastic tightening member (76, 78) is a long bolt, the elongated part being a threaded rod (80), at least one stop being a nut (82) mounted on the threaded rod (80).

3. Clamping device (18) according to any one of claims 1 or 2, wherein the connecting elements (32) comprise, for each clamping component (30A to 30D), a first group of elastic tightening members (76) protruding in a first direction towards the first adjacent clamping component (30A to 30D) and a second group of elastic tightening members (78), protruding in a second direction towards the second adjacent clamping component (30A to 30D).

4. Clamping device (18) according to claim 3, wherein the first direction is substantially perpendicular to the second direction.

5. Clamping device (18) according to any one of claims 3 or 4, wherein the elastic tightening members (76) of the first group are axially offset from the elastic tightening members (78) of the second group.

6. Clamping device (18) according to any one of claims 3 to 5, wherein each elastic tightening member (76) of the first group applies on a first supporting surface (52) of the supporting member (40), each elastic tightening member (78) of the second group applies on a second supporting surface (54) of the supporting member (40) at an angle from the first supporting surface.

7. Clamping device (18) according to any one of the preceding claims, wherein the contact surface of each clamping component (30A to 30D) is angularly distant from the contact surface of the adjacent clamping components (30A to 30D), the cumulative angular extent of the contact surfaces in a plane transverse to the central lumen (72) being greater than 250°.

8. Clamping device (18) according to any one of the preceding claims, wherein each clamping component (30A to 30D) comprises a clamp shell (62), protruding axially from the supporting member (40).

9. Clamping device (18) according to claim 8, wherein each clamp shell (62) comprises on one edge, a lateral key (64) and on another edge a notch (66) for receiving a lateral key (64) of a clamp shell (62) of an adjacent clamping component (30A to 30D).

10. Clamping device (18) according to any one of claims 8 to 9, comprising a swivel (34) mounted around the clamp shells (62).

11. Clamping device (18) according to any one of the preceding claims, comprising a bell mouth (36) attached to the clamping components (30A to 30D).

12. Clamping device (18) according to any one of the preceding claims, wherein the lengh of the elongated part of each elastic tightening member (76, 78) is greater than 1.3 times the transverse extent of the central lumen (72), in particular is comprised between 1.8 times and 2.1 times the transverse extent of the central lumen (72).

13. Subsea assembly (10) comprising:
- at least a line (16), in particular a flexible line;
- a clamping device (18) according to any one of the preceding claims, fixed around the line (16), the contact surfaces of the contact members (70) being applied on the line (16).

14. Method for assembling a clamping device (18) on a line (16), comprising the following steps:
- placing adjacently around the line (16), clamping components (30A to 30D) comprising a longitudinal supporting member (40) and a contact member (70), having a contact surface to contact the line (16), the contact member (70) protruding from the longitudinal supporting member (40);
- assembling connecting elements (32) to hold together the clamping components (30A to 30D) against the line (16);
**characterized in that** the clamping device comprises at least four clamping components (30A to 30D) and **in that** the connecting elements (32) comprises, for each clamping component (30A to 30D) at least one elastic tightening member (76) connecting the supporting member (40) with a supporting member (40) of a first adjacent clamping component (30A to 30D) and at least one elastic tightening member (78) connecting the supporting member (40) with a supporting member (40) of a second adjacent clamping component (30A to 30D), each elastic tightening member (76, 78) comprising an elongated part and two end stops, each end stop cooperating respectively with a supporting surface (40), each elastic tightening member (76, 78) being longer than the transverse extent of the central lumen (72), and protruding beyond the supporting members (40) connected by the elastic tightening member (76, 78).

15. Method according to claim 14, comprising providing for each clamping component (30A to 30D), a first group of elastic tightening members (76) protruding in a first direction towards the first adjacent clamping component (30A to 30D) and a second group of elastic tightening members (78), protruding in a second direction towards the second adjacent clamping component (30A to 30D).

## Patentansprüche

1. Eine Klemmvorrichtung (18), die dazu ausgebildet ist, um eine Leitung (16) herum befestigt zu werden, wobei die Klemmvorrichtung (18) Klemmkomponenten (30A bis 30D) umfasst, die dazu bestimmt ist, um die Leitung (16) herum angeordnet zu werden, wobei jede Klemmkomponente (30A bis 30D) Folgendes umfasst:
- ein Längsstützteil (40);
- ein Anlageteil (70), das eine Anlagefläche zur Anlage an der Leitung (16) aufweist, wobei das Anlageteil (70) von dem Längsstützteil (40) vorsteht;
wobei die Klemmvorrichtung (18) Verbindungselemente (32) umfasst, welche die Klemmteile (30A bis 30D) an der Leitung zusammenhalten (16), wobei die Anlageteile (70) der Klemmkomponenten (30A bis 30D) zusammen eine zentrale lichte Öffnung (72) zur Aufnahme der Leitung (16) definieren;
**dadurch gekennzeichnet, dass** die Klemmvorrichtung mindestens vier Klemmkomponenten (30A bis 30D) umfasst und dadurch, dass die Verbindungselemente (32) für jede Klemmkomponente (30A bis 30D) mindestens ein elastisches Spannteil (76), welches das Stützteil (40) mit einem Stützteil (40) einer ersten benachbarten Klemmkomponente (30A bis 30D) verbindet, und mindestens ein elastisches Spannteil (78), welches das Stützteil (40) mit einem Stützteil (40) einer zweiten benachbarten Klemmkomponente (30A bis 30D) verbindet, umfassen, wobei jedes elastische Spannteil (76, 78) einen länglichen Teil und zwei Endanschläge umfasst, wobei jeder Endanschlag jeweils mit einer Stützfläche (40) zusammenwirkt, wobei jedes elastische Spannteil (76, 78) länger ist, als die Querausdehnung der zentralen lichten Öffnung (72), und über die durch das elastische Spannteil (76, 78) verbundenen Stützteile (40) hinausragt.

2. Klemmvorrichtung (18) nach Anspruch 1, wobei jedes elastische Spannteil (76, 78) ein langer Gewindebolzen ist, wobei der längliche Teil eine Gewindestange (80) ist, wobei mindestens ein Anschlag eine an der Gewindestange (80) befestigte Mutter (82) ist.

3. Klemmvorrichtung (18) nach Anspruch 1 oder 2, wobei die Verbindungselemente (32) für jede Klemmkomponente (30A bis 30D) eine erste Gruppe von elastischen Spannteilen (76) umfassen, die in einer ersten Richtung zu der ersten benachbarten Klemmkomponente (30A bis 30D) vorstehen, und eine zweite Gruppe von elastischen Spannteilen (78), die in einer zweiten Richtung zu der zweiten benachbarten Klemmkomponente (30A bis 30D) vorstehen.

4. Klemmvorrichtung (18) nach Anspruch 3, wobei die erste Richtung im Wesentlichen senkrecht zu der zweiten Richtung verläuft.

5. Klemmvorrichtung (18) nach einem der Ansprüche 3 oder 4, wobei die elastischen Spannteile (76) der ersten Gruppe axial versetzt zu den elastischen Spannteilen (78) der zweiten Gruppe angeordnet sind.

6. Klemmvorrichtung (18) nach einem der Ansprüche 3 bis 5, wobei jedes elastische Spannteil (76) der ersten Gruppe an einer ersten Stützfläche (52) des Stützkörpers anliegt, und jedes elastische Spannteil (78) der zweiten Gruppe an einer zweiten Stützfläche (54) des Stützkörpers (40) unter einem Winkel von der ersten Stützfläche (76) anliegt.

7. Klemmvorrichtung (18) nach einem der vorhergehenden Ansprüche, wobei die Anlagefläche jeder Klemmkomponente (30A bis 30D) winklig von der Anlagefläche der benachbarten Klemmkomponenten (30A bis 30D) beabstandet ist, wobei die kumulative Winkelausdehnung der Anlageflächen in einer Ebene quer zur zentralen lichten Öffnung (72) größer als 250° ist.

8. Klemmvorrichtung (18) nach einem der vorhergehenden Ansprüche, wobei jede Klemmkomponente (30A bis 30D) eine Klemmschale (62) aufweist, die axial aus dem Stützteil (40) herausragt.

9. Klemmvorrichtung (18) nach Anspruch 8, wobei jede Klemmschale (62) an einer Kante einen seitlichen Keil (64) und an einer anderen Kante eine Kerbe (66) zur Aufnahme eines seitlichen Keils (64) einer Klemmschale (62) einer benachbarten Klemmkomponente (30A bis 30D) umfasst.

10. Klemmvorrichtung (18) nach einem der Ansprüche 8 bis 9, umfassend einen Rotationskopf (34), der um die Klemmschalen (62) herum montiert ist.

11. Klemmvorrichtung (18) nach einem der vorhergehenden Ansprüche, umfassend eine an den Klemmkomponenten (30A bis 30D) angebrachte Glockenmündung (36).

12. Klemmvorrichtung (18) nach einem der vorhergehenden Ansprüche, wobei die Länge des länglichen Teils jedes elastischen Spannteils (76, 78) größer als das 1,3-fache der Querausdehnung der zentralen lichten Öffnung (72) ist und insbesondere zwischen dem 1,8-fachen und dem 2,1-fachen der Querausdehnung der zentralen lichten Öffnung (72) liegt.

13. Unterwasserbaugruppe (10), umfassend:
- mindestens eine Leitung (16), insbesondere eine flexible Leitung;
- eine um die Leitung (16) herum befestigte Klemmvorrichtung (18), wobei die Anlageflächen der Anlageteile (70) an der Leitung (16) anliegen.

14. Verfahren zur Montage einer Klemmvorrichtung (18) an einer Leitung (16), die folgenden Schritte umfassend:
- das Anordnen von Klemmkomponenten (30A bis 30D), die ein Längsstützteil (40) und ein Anlageteil (70) mit einer Anlagefläche zum Anliegen an der Leitung (16) umfassen, um die Leitung (16) herum und aneinander angrenzend, wobei das Anlageteil (70) aus dem Längstragteil (40) herausragt;
- das Montieren von Verbindungselementen (32) zum Zusammenhalten der Klemmkomponenten (30A bis 30D) an der Leitung (16);
**dadurch gekennzeichnet, dass** die Klemmvorrichtung mindestens vier Klemmkomponenten (30A bis 30D) umfasst und dadurch, dass die Verbindungselemente (32) Folgendes umfassen: für jede Klemmkomponente (30A bis 30D) mindestens ein elastisches Spannteil (76), welches das Stützteil (40) mit einem Stützteil (40) einer ersten benachbarten Klemmkomponente (30A bis 30D) verbindet, und mindestens ein elastisches Spannteil (78), welches das Stützteil (40) mit einem Stützteil (40) einer zweiten benachbarten Klemmkomponente (30A bis 30D) verbindet, wobei jedes elastische Spannteil (76, 78) einen länglichen Teil und zwei Endanschläge umfasst, wobei jeder Endanschlag jeweils mit einer Stützfläche (40) zusammenwirkt, wobei jedes elastische Spannteil (76, 78) länger ist, als die Querausdehnung der zentralen lichten Öffnung (72), und über die durch das elastische Spannteil (76, 78) verbundenen Stützteile (40) hinausragt.

15. Verfahren nach Anspruch 14, umfassend das Bereitstellen des Folgenden für jede Klemmkomponente (30A bis 30D): eine erste Gruppe von elastischen Spannteilen (76), die in einer ersten Richtung zu der ersten benachbarten Klemmkomponente (30A bis 30D) vorstehen, und eine zweite Gruppe von elastischen Spannteilen (78), die in einer zweiten Richtung zu der zweiten benachbarten Klemmkomponente (30A bis 30D) vorstehen.

## Revendications

1. Dispositif de serrage (18) configuré pour être fixé autour d'une ligne (16), le dispositif de serrage (18) comprenant des composants de serrage (30A à 30D), prévus pour être placés de manière adjacente autour de la ligne (16), chaque composant de serrage (30A à 30D) comprenant :
un élément de support longitudinal (40) ;
un élément de contact (70) ayant une surface de contact pour être en contact avec la ligne (16), l'élément de contact (70) faisant saillie de l'élément de support longitudinal (40) ;
le dispositif de serrage (18) comprenant des éléments de raccordement (32) maintenant ensemble les composants de serrage (30A à 30D) contre la ligne (16), les éléments de contact (70) des composants de serrage (30A à 30D) définissant ensemble une lumière centrale (72) pour recevoir la ligne (16) ;
**caractérisé en ce que** le dispositif de serrage comprend au moins quatre composants de serrage (30A à 30D) et **en ce que** les éléments de raccordement (32) comprennent, pour chaque composant de serrage (30A à 30D) au moins un élément de serrage élastique (76) raccordant l'élément de support (40) avec un élément de support (40) d'un premier composant de serrage (30A à 30D) adjacent et au moins un élément de serrage élastique (78) raccordant l'élément de support (40) avec un élément de support (40) d'un second composant de serrage (30A à 30D) adjacent, chaque élément de serrage élastique (76, 78) comprenant une partie allongée et deux butées d'extrémité, chaque butée d'extrémité coopérant respectivement avec une surface de support (40), chaque élément de serrage élastique (76, 78) étant plus long que l'étendue transversale de la lumière centrale (72), et faisant saillie au-delà des éléments de support (40) raccordés par l'élément de serrage élastique (76, 78).

2. Dispositif de serrage (18) selon la revendication 1, dans lequel chaque élément de serrage élastique (76, 78) est un long boulon, la partie allongée étant une tige filetée (80), et au moins une butée étant un écrou (82) monté sur la tige filetée (80).

3. Dispositif de serrage (18) selon l'une quelconque des revendications 1 ou 2, dans lequel les éléments de raccordement (32) comprennent, pour chaque composant de serrage (30A à 30D), un premier groupe d'éléments de serrage élastiques (76) faisant saillie dans une première direction vers le premier composant de serrage (30A à 30D) adjacent et un second groupe d'éléments de serrage élastiques (78), faisant saillie dans une seconde direction vers le second composant de serrage (30A à 30D) adjacent.

4. Dispositif de serrage (18) selon la revendication 3, dans lequel la première direction est sensiblement perpendiculaire à la seconde direction.

5. Dispositif de serrage (18) selon l'une quelconque des revendications 3 ou 4, dans lequel les éléments de serrage élastiques (76) du premier groupe sont axialement décalés des éléments de serrage élastiques (78) du second groupe.

6. Dispositif de serrage (18) selon l'une quelconque des revendications 3 à 5, dans lequel chaque élément de serrage élastique (76) du premier groupe s'applique sur une première surface de support (52) de l'élément de support (40), chaque élément de serrage élastique (78) du second groupe s'applique sur une seconde surface de support (54) de l'élément de support (40) à un angle à partir de la première surface de support.

7. Dispositif de serrage (18) selon l'une quelconque des revendications précédentes, dans lequel la surface de contact de chaque composant de serrage (30A à 30D) est angulairement distante de la surface de contact des composants de serrage (30A à 30D) adjacents, l'étendue angulaire cumulée des surfaces de contact dans un plan transversal à la lumière centrale (72) étant supérieure à 250°.

8. Dispositif de serrage (18) selon l'une quelconque des revendications précédentes, dans lequel chaque composant de serrage (30A à 30D) comprend une coque de serrage (62), faisant axialement saillie de l'élément de support (40).

9. Dispositif de serrage (18) selon la revendication 8, dans lequel chaque coque de serrage (62) comprend sur un bord, une clé latérale (64) et sur un autre bord, une encoche (66) pour recevoir une clé latérale (64) d'une coque de serrage (62) d'un composant de serrage (30A à 30D) adjacent.

10. Dispositif de serrage (18) selon l'une quelconque des revendications 8 à 9, comprenant un pivot (34) monté autour des coques de serrage (62).

11. Dispositif de serrage (18) selon l'une quelconque des revendications précédentes, comprenant un pavillon (36) fixé sur les composants de serrage (30A à 30D).

12. Dispositif de serrage (18) selon l'une quelconque des revendications précédentes, dans lequel la longueur de la partie allongée de chaque élément de serrage élastique (76, 78) est supérieure à 1,3 fois l'étendue transversale de la lumière centrale (72), en particulier est comprise entre 1,8 fois et 2,1 fois de l'étendue transversale de la lumière centrale (72).

13. Ensemble sous-marin (10) comprenant :
au moins une ligne (16), en particulier une ligne flexible ;
un dispositif de serrage (18) selon l'une quelconque des revendications précédentes, fixé autour de la ligne (16), les surfaces de contact des éléments de contact (70) étant appliquées sur la ligne (16).

14. Procédé pour assembler un dispositif de serrage (18) sur une ligne (16) comprenant les étapes suivantes consistant à :
placer, de manière adjacente, autour de la ligne (16), des composants de contact (30A à 30D) comprenant un élément de support longitudinal (40) et un élément de contact (70) ayant une surface de contact pour entrer en contact avec la ligne (16), l'élément de contact (70) faisant saillie de l'élément de support longitudinal (40) ;
assembler les éléments de raccordement (32) pour maintenir ensemble les composants de serrage (30A à 30D) contre la ligne (16) ;
**caractérisé en ce que** le dispositif de serrage comprend au moins quatre composants de serrage (30A à 30D) et **en ce que** les éléments de raccordement (32) comprennent, pour chaque composant de serrage (30A à 30D), au moins un élément de serrage élastique (76) raccordant l'élément de support (40) avec un élément de support (40) d'un premier composant de serrage (30A à 30D) adjacent et au moins un élément de serrage élastique (78) raccordant l'élément de support (40) avec un élément de support (40) d'un second composant de serrage (30A à 30D) adjacent, chaque élément de serrage élastique (76, 78) comprenant une partie allongée et deux butées d'extrémité, chaque butée d'extrémité coopérant, respectivement, avec une surface de support (40), chaque élément de serrage élastique (76, 78) étant plus long que l'étendue transversale de la lumière centrale (72) et faisant saillie au-delà des éléments de support (40) raccordés par l'élément de serrage élastique (76, 78).

15. Procédé selon la revendication 14, comprenant en outre l'étape consistant à prévoir pour chaque composant de serrage (30A à 30D), un premier groupe d'éléments de serrage élastiques (76) faisant saillie dans une première direction vers le premier composant de serrage (30A à 30D) adjacent et un second groupe d'éléments de serrage élastiques (78), faisant saillie dans une seconde direction vers le second composant de serrage (30A à 30D) adjacent.
